(19) Europäisches Patentamt
European Patent Office
Office européen des brevets

(11) **EP 4 716 337 A1**

(12) **EUROPEAN PATENT APPLICATION**
published in accordance with Art. 153(4) EPC

(43) Date of publication:
**25.03.2026 Bulletin 2026/13**

(21) Application number: **24830712.6**

(22) Date of filing: **24.06.2024**

(51) International Patent Classification (IPC):
*H04W 72/0446* (2023.01)

(52) Cooperative Patent Classification (CPC):
**H04W 56/00; H04W 72/044; H04W 72/0446; H04W 72/30**

(86) International application number:
**PCT/CN2024/101091**

(87) International publication number:
**WO 2025/002070 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.06.2023 CN 202310788838**

(71) Applicant: **Huawei Technologies Co., Ltd.**
**Shenzhen, Guangdong 518129 (CN)**

(72) Inventors:
• **ZHANG, Min**
  **Shenzhen, Guangdong 518129 (CN)**
• **YU, Long**
  **Shenzhen, Guangdong 518129 (CN)**
• **YANG, Bin**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SYSTEM INFORMATION SENDING METHOD AND COMMUNICATION APPARATUS**

(57)     Embodiments of this application provide a system information sending method and a communication apparatus. The method includes: A network device determines, based on a transmission repetition periodicity of RMSI, a first sending periodicity and a time domain resource corresponding to the first sending periodicity, and sends the RMSI to a terminal device based on the first sending periodicity and the time domain resource corresponding to the first sending periodicity. The transmission repetition periodicity is a transmission repetition periodicity for transmission of the RMSI by using each of a plurality of beams. The time domain resource corresponding to the first sending periodicity includes: a time domain resource that is in a time domain resource corresponding to the transmission repetition periodicity and that is used for transmitting a first beam group in the plurality of beams and not for transmitting a beam other than the first beam group in the plurality of beams. That is, RMSI does not need to be sent by using each beam in one transmission repetition periodicity, thereby reducing a proportion of time domain resource overheads for transmitting the RMSI. Further, the first beam group is repeatedly transmitted in the first sending periodicity, so that a degree of impairment of an RMSI combination gain can be reduced.

FIG. 4

**Description**

This application claims priority to Chinese Patent Application No. 202310788838.0, filed with the China National Intellectual Property Administration on June 29, 2023 and entitled "SYSTEM INFORMATION SENDING METHOD AND COMMUNICATION APPARATUS", which is incorporated herein by reference in its entirety.

**TECHNICAL FIELD**

This application relates to the communication field, and in particular, to a system information sending method and a communication apparatus.

**BACKGROUND**

A synchronization signal/physical broadcast channel block (synchronization signal/physical broadcast channel block, SSB) includes a master information block (master information block, MIB), and the MIB includes configuration parameters needed to obtain remaining minimum system information (remaining minimum system information, RMSI). The RMSI includes system information (system information, SI) needed by a terminal device to complete initial access. To enable the terminal device that receives the SSB to receive the RMSI, a coverage area of a beam used by a network device to send the SSB needs to be the same as a coverage area of a beam used for sending the RMSI. Therefore, the network device needs to traverse, in a transmission repetition periodicity (transmission repetition periodicity), each of a plurality of RMSI beams with different coverage areas to send the RMSI.

However, when the transmission repetition periodicity is small, a proportion of time domain resource overheads for transmitting the RMSI is large in a time domain resource corresponding to the transmission repetition periodicity. Therefore, how to reduce the proportion of the time domain resource overheads for transmitting the RMSI is a problem that needs to be urgently resolved currently.

**SUMMARY**

According to a system information sending method and a communication apparatus provided in embodiments of this application, a proportion of time domain resource overheads for transmitting RMSI can be reduced.

To achieve the foregoing objective, the following technical solutions are used in embodiments of this application.

According to a first aspect, a communication method is provided. The method may be performed by a network device, may be performed by a component of the network device, for example, a processor, a chip, or a chip system of the network device, or may be implemented by a logical module or software that can implement all or some functions of the network device. An example in which the method is performed by the network device is used below for description. The method includes: The network device determines, based on a transmission repetition periodicity of RMSI, a first sending periodicity and a time domain resource corresponding to the first sending periodicity, and sends the RMSI to a terminal device based on the first sending periodicity and the time domain resource corresponding to the first sending periodicity. The transmission repetition periodicity is a transmission repetition periodicity for transmission of the RMSI by using each of a plurality of beams. The time domain resource corresponding to the first sending periodicity includes: a time domain resource that is in a time domain resource corresponding to the transmission repetition periodicity and that is used for transmitting a first beam group in the plurality of beams and not for transmitting a beam other than the first beam group in the plurality of beams, and the first beam group is repeatedly transmitted in the first sending periodicity.

In this embodiment of this application, the network device sends the RMSI by using the time domain resource corresponding to the first sending periodicity, so that the network device can send the RMSI only by using the first beam group on the time domain resource corresponding to the transmission repetition periodicity, and does not need to send the RMSI by using each beam. Therefore, a proportion of time domain resource overheads for transmitting the RMSI can be reduced in the time domain resource corresponding to the transmission repetition periodicity. Further, the first beam group is repeatedly transmitted in the first sending periodicity, so that a degree of impairment of an RMSI combination gain can be reduced. Therefore, based on the system information sending method provided in embodiments of this application, the degree of the impairment of the RMSI combination gain can be reduced while the proportion of the time domain resource overheads for transmitting the RMSI is reduced.

In a possible implementation, each of the plurality of beams corresponds to an SSB. For example, each of the plurality of beams may be an SSB beam corresponding to each of a plurality of SSBs, and the plurality of SSBs may be a plurality of SSBs in an SSB burst set. For example, transmission of four SSBs in the SSB burst set is performed, and a quantity of the plurality of beams is 4. For another example, transmission of 64 beams in the SSB burst set is performed, and a quantity of the plurality of beams is 64. Further, each of the plurality of beams may alternatively be a beam whose coverage area is close to a coverage area of the SSB beam corresponding to each of the plurality of beams. This is not specifically limited in this embodiment of this application.

In a possible implementation, a time domain resource used for transmission of each of the plurality of beams is determined based on the SSB corresponding to each of the plurality of beams.

In a possible implementation, the transmission repetition periodicity may be a transmission repetition periodicity of RMSI transmitted by using each of the plurality of beams in a sending periodicity of the RMSI. The transmission repetition periodicity may be a multiple of 20 ms, for example, 20 ms, 40 ms, 60 ms, 80 ms, or 160 ms. It should be understood that the transmission repetition periodicity may not be a multiple of 20 ms. This is not specifically limited in this embodiment of this application.

In a possible implementation, the first sending periodicity may be an integer multiple of the transmission repetition periodicity. For example, the first sending periodicity may be two times, three times, four times, or more times the transmission repetition periodicity. Further, the first sending periodicity may be 160 ms, or the first sending periodicity may be greater than 160 ms. This is not specifically limited in this embodiment of this application.

In a possible implementation, in the time domain resource corresponding to the first sending periodicity, the time domain resource used for transmission of each of the plurality of beams is a time domain resource corresponding to each of the plurality of beams in the transmission repetition periodicity. For example, the first sending periodicity is two times the transmission repetition periodicity, and transmission of 16 beams (that is, a beam #1 to a beam #16) is performed in the transmission repetition periodicity. Time domain resources corresponding to the first sending periodicity include a time domain resource #1 corresponding to a $1^{st}$ transmission repetition periodicity, and a time domain resource #2 corresponding to a $2^{nd}$ transmission repetition periodicity. In the first sending periodicity, a slot used for transmission of the beam #1 may be a slot used for transmission of the beam #1 on the time domain resource #1, and a slot used for transmission of the beam #16 may be a slot used for transmission of the beam #1 on a time domain resource #16. In other words, in the time domain resource corresponding to the first sending periodicity, the time domain resource corresponding to each of the plurality of beams in the transmission repetition periodicity may be reused.

Further, the time domain resource corresponding to the first sending periodicity may include a time domain resource for sending only a first beam, to be specific, the time domain resource that is in the time domain resource corresponding to the transmission repetition periodicity and that is used for transmitting the first beam group in the plurality of beams and not for transmitting a beam other than the first beam group in the plurality of beams. In other words, in the time domain resource corresponding to the transmission repetition periodicity, the beam other than the first beam group may not be sent, to reduce the proportion of the time domain resource overheads for transmitting the RMSI.

In a possible implementation, the first beam group may include any Y beams in the plurality of beams. For example, the plurality of beams are M beams. A value range of Y is [1, M). When Y is greater than 1, the Y beams may be adjacent to each other or separated from each other. This is not specifically limited in this embodiment of this application. Further, the first beam group is repeatedly transmitted in the first sending periodicity. A quantity of times of repeated transmission of the first beam group may be 1, 2, 3, or more. This is not specifically limited in this embodiment of this application. In other words, for a terminal device in a coverage area of the first beam group, because the first beam group is repeatedly transmitted, the terminal device may receive the RMSI for a plurality of times in the first sending periodicity, to obtain the combination gain of the RMSI.

It may be understood that, for RMSI combination performed by the terminal device, the terminal device may receive the RMSI for three to five times in given time, to perform RMSI combination, so that the obtained RMSI combination gain can satisfy a coverage requirement.

Further, in a possible implementation, a time interval of the repeated transmission of the first beam group may be equal to the foregoing transmission repetition periodicity. In other words, because a periodicity of the repeated transmission of the first beam remains unchanged, in the given time, the terminal device in the coverage area of the first beam group may receive the RMSI for at least two times to perform RMSI combination, thereby reducing the degree of the impairment of the RMSI combination gain. It may be understood that when the quantity of times of the repeated transmission of the first beam group is greater than or equal to 2, and the time interval of the repeated transmission of the first beam group may be equal to the foregoing transmission repetition periodicity, the terminal device in the coverage area of the first beam group may receive the RMSI at least three times in the given time. That is, the RMSI combination gain is not impaired.

In a possible implementation, the time domain resource that is in the time domain resource corresponding to the transmission repetition periodicity and that is used for transmitting the first beam group in the plurality of beams and not for transmitting a beam other than the first beam group in the plurality of beams includes: a time domain resource that is in a time domain resource corresponding to each transmission repetition periodicity in time domain resources corresponding to N1 transmission repetition periodicities and that is used for transmitting the first beam and not for transmitting a beam other than the first beam group in the plurality of beams, and N1 is an integer greater than 1. It may be understood that, by using a plurality of time domain resources for sending only the first beam group, the proportion of the time domain resource overheads for transmitting the RMSI on the time domain resource corresponding to the first sending periodicity can be reduced in an overall manner.

In a possible implementation, time domain resources corresponding to all of the N1 transmission repetition periodicities have an interval between each other. The interval may be, for example, one transmission repetition periodicity, two transmission repetition periodicities, or more transmission repetition periodicities. Further, an interval between time domain resources corresponding to two transmission repetition periodicities that vary may vary. For example, if N1 is 3, an interval between a time domain resource corresponding to a 1st transmission repetition periodicity and a time domain resource corresponding to a 2nd transmission repetition periodicity may be one transmission repetition periodicity, and an interval between the time domain resource corresponding to the 2nd transmission repetition periodicity and a time domain resource corresponding to a 3rd transmission repetition periodicity may be two transmission repetition periodicities.

In a possible implementation, time domain resources corresponding to all of the N1 transmission repetition periodicities are adjacent to each other. It may be understood that, in comparison with the foregoing case in which the time domain resources corresponding to the N1 transmission repetition periodicities have an interval between each other, the time domain resources corresponding to the N1 transmission repetition periodicities are adjacent to each other, so that transmission time needed for sending the first beam group alone N1 times can be reduced, and the proportion of the time domain resource overheads for transmitting the RMSI can be further reduced.

In a possible implementation, when N1 is greater than 2, time domain resources corresponding to at least two transmission repetition periodicities in the time domain resources corresponding to the N1 transmission repetition periodicities are adjacent to each other. It may be understood that the time domain resources corresponding to the at least two transmission repetition periodicities are adjacent to each other, so that the proportion of the time domain resource overheads for transmitting the RMSI can be reduced in the time domain resources corresponding to the adjacent transmission repetition periodicities.

In a possible implementation, time needed for transmission of the first beam group in the first sending periodicity is time corresponding to the N1 transmission repetition periodicities. In other words, in the first sending periodicity, transmission of the first beam group is performed by using the foregoing time domain resource for sending only the first beam group, and the first beam group is not repeatedly sent on another time domain resource. In this way, the time domain resource overheads for transmitting the RMSI can be further reduced. Further, the degree of the impairment of the RMSI combination gain can also be reduced by using the first beam group that is repeatedly sent adjacently.

In a possible implementation, the time domain resource corresponding to the first sending periodicity further includes: a time domain resource that is in the time domain resource corresponding to the transmission repetition periodicity and that is used for transmitting a second beam group in the plurality of beams and not for transmitting a beam other than the second beam group in the plurality of beams, and a beam included in the second beam group is different from a beam included in the first beam group. In other words, on a basis of sending only the first beam group, the proportion of the time domain resource overheads for transmitting the RMSI may be further reduced by not sending the beam other than the second beam group.

It should be understood that, for ease of description, the foregoing "a time domain resource that is in the time domain resource corresponding to the transmission repetition periodicity and that is used for transmitting a second beam group in the plurality of beams and not for transmitting a beam other than the second beam group in the plurality of beams" is replaced with "a time domain resource for sending only the second beam group".

In a possible implementation, a quantity of beams included in the second beam group may be K. For example, the plurality of beams are M beams, and a quantity of beams included in the first beam group is Y. A value range of K is [1, M-Y]. Further, when K is greater than 1, the K beams are adjacent to each other or are separated from each other. This is not specifically limited in this embodiment of this application. It may be understood that K may be the same as or different from Y. For example, M=16. Y may be equal to 4, and K may be equal to any value in 1 to 12. For example, the M beams include an SSB beam #1 to an SSB beam #16, and the first beam group is the SSB beam #1, an SSB beam #2, and SSB beams #14 to #16. The second beam group may be any one, two, three, 12, or the like of an SSB beam #3 to an SSB beam #13. Further, using an example in which the second beam group includes the SSB beam #3 to the SSB beam #13, in the time domain resource corresponding to the first sending periodicity, time domain resource overheads for transmitting the RMSI are reduced from original 16 slots to 11 slots in one transmission repetition periodicity 20 ms, so that a proportion of the time domain resource overheads for transmitting the RMSI can be reduced.

In a possible implementation, the time domain resource that is in the time domain resource corresponding to the transmission repetition periodicity and that is used for transmitting the second beam group in the plurality of beams and not for transmitting a beam other than the second beam group in the plurality of beams includes: a time domain resource that is in a time domain resource corresponding to each transmission repetition periodicity in time domain resources corresponding to N2 transmission repetition periodicities and that is used for transmitting a second beam and not for transmitting a beam other than the second beam group in the plurality of beams, and N2 is an integer greater than 1. In other words, in the time domain resource corresponding to the first sending periodicity, the second beam group may also be repeatedly transmitted. Therefore, for a terminal device in a coverage area of the second beam group, a degree of impairment of an RMSI combination gain can be reduced.

It may be understood that a time domain resource for sending only the second beam group is similar to the time domain resource for sending only the first beam group. For example, a quantity of time domain resources for sending only the second beam group may be N2. For another example, the time domain resources corresponding to the N2 transmission repetition periodicities may be at any time domain position in the first sending periodicity. For another example, the time domain resources corresponding to each transmission repetition periodicity in the time domain resources corresponding to the N2 transmission repetition periodicities may have an interval in between, be adjacent, or be partially adjacent.

In a possible implementation, N1 and N2 may be different. The time domain resources for sending only the first beam group and the time domain resources for sending only the second beam group may be alternately arranged first or later. For example, N1=3 and N2=5. Three time domain resources for sending only the first beam group and three time domain resources for sending only the second beam group may be alternately arranged first, and then remaining two time domain resources for sending only the second beam group are arranged. It may be understood that, another arrangement manner may be used for the time domain resource for sending only the first beam group and the time domain resource for sending only the second beam group.

In a possible implementation, the first beam group is periodically transmitted in the first sending periodicity. A periodicity in which the first beam group is transmitted in the first sending periodicity may be the transmission repetition periodicity. In other words, the terminal device in the coverage area of the first beam group may continuously receive the RMSI for N1 times to perform RMSI combination, thereby reducing the degree of the impairment of the RMSI combination gain. It may be understood that the second beam group may also be periodically transmitted in the first sending periodicity, and a periodicity in which the second beam group is transmitted in the first sending periodicity may also be the transmission repetition periodicity. In this way, for the terminal device in the coverage area of the second beam group, the degree of the impairment of the RMSI combination gain can be reduced.

It may be understood that when a quantity of beams between the first beam group and the second beam group is less than a quantity of a plurality of beams that need to be traversed, the network device may further send a third beam group, the third beam group and a fourth beam group, or the like. The third beam group may include a beam other than the first beam group and the second beam group in the plurality of beams. The fourth beam group may include a beam other than the first beam group to the third beam group in the plurality of beams. Further, quantities of times of transmission in the first sending periodicity may be the same or different for all beam groups in the first beam group to the fourth beam group.

According to a second aspect, a communication apparatus is provided, to implement the foregoing various methods. The communication apparatus may be the network device in the first aspect or any implementation of the first aspect, an apparatus including the network device, or an apparatus included in the network device, for example, a chip. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the first aspect and the possible implementations of the first aspect. The transceiver module may include a transceiver circuit, a transceiver machine, a transceiver, or a communication interface. The processing module may be configured to implement a processing function in any one of the first aspect and the possible implementations of the first aspect.

In some possible designs, the transceiver module includes a sending module and a receiving module, respectively configured to implement the sending function and the receiving function in any one of the first aspect and the possible implementations of the first aspect.

According to a third aspect, a communication apparatus is provided, including a processor and a memory. The memory is configured to store computer instructions. When the processor executes the instructions, the communication apparatus is enabled to perform the method in the first aspect. The communication apparatus may be the network device in the first aspect or any implementation of the first aspect, an apparatus including the network device, or an apparatus included in the network device, for example, a chip.

According to a fourth aspect, a communication apparatus is provided, including a processor and a communication interface. The communication interface is configured to communicate with a module other than the communication apparatus. The processor is configured to execute a computer program or instructions, so that the communication apparatus performs the method according to the first aspect. The communication apparatus may be the network device in the first aspect or any implementation of the first aspect, an apparatus including the network device, or an apparatus included in the network device, for example, a chip.

According to a fifth aspect, a communication apparatus is provided, including at least one processor. The processor is configured to execute a computer program or instructions stored in a memory, to enable the communication apparatus to perform the method according to the first aspect. The memory may be coupled to the processor, or may be independent of the processor. The communication apparatus may be the network device in the first aspect or any implementation of the first aspect, an apparatus including the network device, or an apparatus included in the network device, for example, a chip.

According to a sixth aspect, a computer-readable storage medium is provided. The computer-readable storage medium stores a computer program or instructions. When the computer program or the instructions are run on a communication apparatus, the communication apparatus is enabled to perform the method according to any one of the first aspect or the implementations of the first aspect.

According to a seventh aspect, a computer program product including instructions is provided. When the computer program product runs on a communication apparatus, the communication apparatus is enabled to perform the method according to any one of the first aspect or the implementations of the first aspect.

According to an eighth aspect, a communication apparatus is provided (for example, the communication apparatus may be a chip or a chip system). The communication apparatus includes a processor, configured to implement the function according to any one of the first aspect or the implementations of the first aspect.

In some possible designs, the communication apparatus includes a memory, and the memory is configured to store necessary program instructions and data.

In some possible designs, when the apparatus is the chip system, the apparatus may include a chip, or may include the chip and another discrete component.

It may be understood that, when the communication apparatus provided in any one of the second aspect to the eighth aspect is a chip, the foregoing sending action/function may be understood as an output, and the foregoing receiving action/function may be understood as an input.

For technical effects brought by any one of the design manners of the second aspect to the eighth aspect, refer to technical effects brought by the different design manners of the first aspect. Details are not described herein again.

According to a ninth aspect, a communication system is provided. The communication system includes the network device according to the foregoing aspects.

In some possible designs, the communication system further includes the terminal device according to the foregoing aspects.

## BRIEF DESCRIPTION OF DRAWINGS

FIG. 1A and FIG. 1B are a diagram of RMSI transmission according to an embodiment of this application;

FIG. 2 is a diagram of a structure of a communication system according to an embodiment of this application;

FIG. 3 is a diagram of a structure of a communication apparatus according to an embodiment of this application;

FIG. 4 is a schematic flowchart of a system information sending method according to an embodiment of this application;

FIG. 5 is a diagram of transmitting RMSI by using 16 SSB beams in 160 ms according to an embodiment of this application;

FIG. 6 is another diagram of transmitting RMSI by using 16 SSB beams in 160 ms according to an embodiment of this application; and

FIG. 7 is a diagram of a structure of a network device according to an embodiment of this application.

## DESCRIPTION OF EMBODIMENTS

For ease of understanding of technical solutions provided in embodiments of this application, technologies related to embodiments of this application are first described briefly. The brief descriptions are as follows:

1. Time-frequency resource in a new radio (new radio, NR) system:

Time-frequency resources include a time domain resource and a frequency domain resource. The time domain resource and the frequency domain resource in the NR system are related to a transmission scheme of the NR system. An orthogonal frequency division multiplexing (orthogonal frequency division multiplexing, OFDM) technology may be used in an uplink (uplink, UL) transmission scheme and a downlink (downlink, DL) transmission scheme of the NR system. A principle of OFDM is as follows: A plurality of subchannels are obtained through division in frequency domain, serial-to-parallel conversion is performed on to-be-transmitted data to obtain a plurality of groups of data to be transmitted in parallel, and then each group of data is modulated to a subcarrier (subcarrier) corresponding to each subchannel for transmission. That is, the to-be-transmitted data may be transmitted by using a plurality of overlapping subcarriers in space. In other words, in the NR system, a smallest frequency domain resource is one subcarrier, and a smallest time domain resource is one OFDM symbol.

It may be understood that a specific configuration of the OFDM is related to a subcarrier spacing (subcarrier spacing, SCS) configuration. Table 1 shows SCSs supported in the NR system. In Table 1, a 1st column is the SCS configuration $\mu$, and a 2nd column $\Delta f$ indicates the SCS.

Table 1

| $\mu$ | $\Delta f = 2^{\mu} \cdot 15$ [kHz] |
|---|---|
| 0 | 15 |
| 1 | 30 |
| 2 | 60 |
| 3 | 120 |
| 4 | 240 |

The following separately describes the time domain resource and the frequency domain resource in the NR system with reference to the SCS.

1.1. Time domain resource:

In time domain, in the NR system, transmission may be performed in radio frames (frame). Duration of each radio frame is $T_f$ = 10 ms. Each radio frame may include 10 subframes whose duration is $T_{sf}$ = 1 ms. 10 subframes in one radio frame may be arranged in sequence. For example, the 10 subframes in the radio frame may be arranged in ascending order of time as follows: a subframe #0 to a subframe #9. For another example, the 10 subframes may be arranged in descending order of time, that is, the subframe #9 to the subframe #0. A subframe arrangement manner is not specifically limited in embodiments of this application.

It may be understood that one radio frame may be further divided into two half-frames of a same size, that is, a half-frame #0 and a half-frame #1. Each half-frame includes five subframes. For example, the half-frame #0 may include the subframes #0 to #4, and the half-frame #1 may include the subframes #5 to #9.

It should be understood that the foregoing numbers and sequences of the half-frames and the subframes are merely examples. For example, a number may also start with #1. For example, the 10 subframes in the radio frame may be represented as the subframe #1 to a subframe #10.

Further, in the NR system, one subframe may include several slots (slots). For the subcarrier spacing configuration $\mu$, the slots may be numbered in $n_s^{\mu} \in \{0, \ldots, N_{slot}^{subframe,\mu} - 1\}$ and arranged in ascending order in the subframe, and may be numbered in $n_{s,f}^{\mu} \in \{0, \ldots, N_{slot}^{frame,\mu} - 1\}$ and arranged in ascending order in the radio frame. There are $N_{symb}^{slot}$ consecutive OFDM symbols in one slot, and $N_{symb}^{slot}$ is related to a cyclic prefix (cyclic prefix, CP) used by the OFDM symbol. CPs may be classified into a normal CP (normal CP) and an extended CP (extended CP). For $N_{symb}^{slot}$ corresponding to the normal CP, refer to Table 2. For $N_{symb}^{slot}$ corresponding to the extended CP, refer to Table 3.

It should be understood that a time domain start position of a slot $n_s^{\mu}$ in a subframe is aligned with a time domain start position of an OFDM symbol $n_s^{\mu} N_{symb}^{slot}$ in the same subframe. For example, when one slot includes 14 OFDM symbols, the OFDM symbols may be chronologically sequenced as follows: an OFDM symbol #0 to an OFDM symbol #13. A time domain start position of the OFDM symbol #0 is the same as a time domain start position of the slot.

Table 2

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |

(continued)

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 14 | 40 | 4 |
| 3 | 14 | 80 | 8 |
| 4 | 14 | 160 | 16 |

Table 3

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

Further, because the transmission in the NR system may be classified into uplink transmission and downlink transmission, one slot may be used for uplink transmission or downlink transmission. A network may configure a configuration between an uplink slot used for uplink transmission and a downlink slot used for downlink transmission in a downlink-uplink transmission periodicity (DL-UL transmission periodicity). For example, the downlink-uplink transmission periodicity may be 0.5 ms, 0.625 ms, 1.25 ms, 2.5 ms, or the like, and the configuration between the uplink slot and the downlink slot may be 1:4, 3:7, 1:3, or the like. This is not specifically limited in embodiments of this application.

For example, for SCS configuration $\mu$=3, that is, SCS=120 kHz, as shown in Table 2, one subframe (1 ms) may include eight slots, and one radio frame (10 ms) may include 80 slots. For example, the configuration between the uplink slot and the downlink slot is 1:4. 80 slots in one radio frame may be divided into 16 uplink slots and 64 downlink slots.

It should be understood that, for details of the downlink-uplink transmission periodicity and the configuration between the uplink slot and the downlink slot, refer to related descriptions in TS 38.213. Details are not described herein again.

1.2. Frequency domain resource:

In the NR system, one subcarrier in frequency domain and one OFDM symbol in time domain may be defined as resource elements (resource elements, REs). The RE is a resource with a minimum granularity at a physical layer.

Further, in frequency domain, regardless of a subcarrier spacing, 12 consecutive subcarriers may be defined as one resource block (resource block, RB) in the NR system.

2. SSB:

The SSB may include a primary synchronization signal (primary synchronization signal, PSS), a secondary synchronization signal (secondary synchronization signal, SSS), and a physical broadcast channel (physical broadcast channel, PBCH). A terminal device first needs to detect the PSS and the SSS to obtain downlink time-frequency synchronization and a physical cell identifier (physical cell identifier, PCID), and then decodes the PBCH. The PBCH includes a MIB and other information related to SSB transmission time. The MIB includes a configuration parameter needed for obtaining RMSI. The terminal device may blindly detect a physical downlink control channel (physical downlink control channel, PDCCH) based on the configuration parameter, to obtain downlink control information (downlink control information, DCI). The DCI may indicate a time-frequency resource of a physical downlink shared channel (physical downlink shared channel, PDSCH) bearing the RMSI. In this way, the terminal device may receive the RMSI based on the time-frequency resource, and complete initial access based on the RMSI. For a specific process in which the terminal device obtains the RMSI, refer to related descriptions in TS 38.213. Details are not described herein again.

Further, because a propagation loss of a high-frequency-band carrier is large, a beamforming manner needs to be used for increasing a coverage distance of a radio signal. Because a coverage angle of each beam is limited, that is, a width of the beam is narrow, a terminal device beyond a coverage area of the beam cannot reliably receive a radio signal from a network device. However, the SSB is a broadcast signal (or referred to as a broadcast channel), and needs to be received by all terminal devices in a cell. A beam with a limited coverage angle cannot actually satisfy a requirement for full coverage of the cell. Therefore, transmission of the SSB needs to be performed by the network device in a beam sweeping manner.

Further, transmission of the SSB performed in the beam sweeping manner may mean transmission of the SSB at different moments by using beams in different directions, to cover the entire cell. The beam for transmission of the SSB may be referred to as an SSB beam. Different SSB beams have different directions. That is, different SSB beams have different coverage areas. A plurality of SSBs that need to be sent to complete one time of beam sweeping form one SSB burst set, and a maximum quantity of SSBs included in one SSB burst set may be 4, 8, 16, or 64. The SSB burst set needs to be transmitted in a half-frame 5 ms, and a transmission periodicity of the SSB burst set may be {5, 10, 20, 40, 80, 160} ms.

3. RMSI:

The RMSI may also be referred to as a system information block type 1 (system information block type 1, SIB1). The RMSI may include a public land mobile network (public land mobile network, PLMN) ID, a cell global ID, a cell barring state, a cell selection parameter, other system information, or the like. For details, refer to related descriptions in TS 38.331. Details are not described herein again.

It may be understood that, as described in the foregoing "2. SSB", different SSB beams have different coverage areas and sending time, and the terminal device needs to determine, based on the received SSB, the time-frequency resource for receiving the RMSI. To enable all the terminal devices at different positions in the cell to receive the RMSI, the network device needs to send the RMSI by using each of a plurality of SSB beams, so that the terminal device can access the network device.

Further, a transmission periodicity of the RMSI may be 160 ms, and same information may be repeatedly transmitted in 160 m. That is, the RMSI is periodically transmitted in 160 ms by using each of the plurality of SSB beams. The network device may send the RMSI after sending the SSB burst set, or a time-frequency resource corresponding to each SSB in the SSB burst set may be reused for the network device to send the RMSI. For details, refer to related descriptions in TS 38.213. Details are not described herein again.

It should be understood that a transmission repetition periodicity for transmission of the RMSI by using each of the plurality of SSB beams is 20 ms by default. However, an actual transmission repetition periodicity may be set by a network, for example, may be set by the network device, or may be set by a core network (core network, CN).

Further, in the transmission repetition periodicity, a time domain resource used for transmission of each of the plurality of SSB beams is determined based on an SSB corresponding to the SSB beam. For example, a time domain resource used for transmission of an SSB beam is different from a time domain resource used for transmission of an SSB corresponding to the SSB beam, and a time interval between the two may be determined based on a MIB in the SSB corresponding to the SSB beam. For another example, the time domain resource used for transmission of the SSB beam may be reused with the time domain resource used for transmission of the SSB corresponding to the SSB beam. It may be understood that, for details of the time domain resource used for transmission of the SSB beam, refer to related descriptions in TS 38.213. Details are not described herein again.

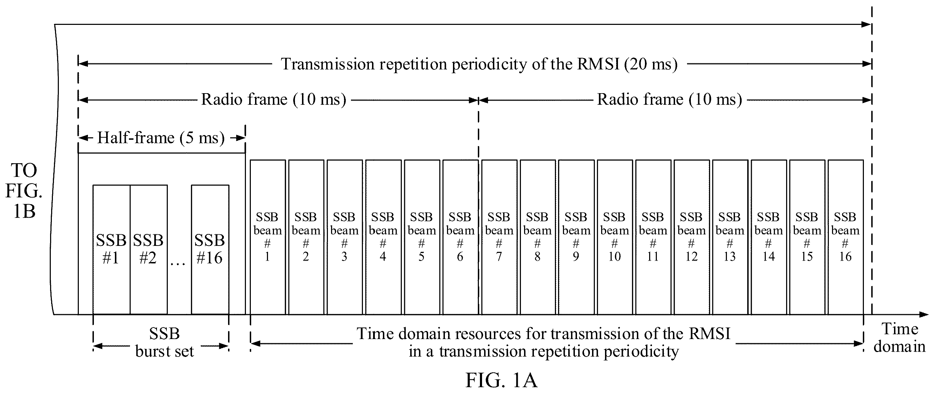

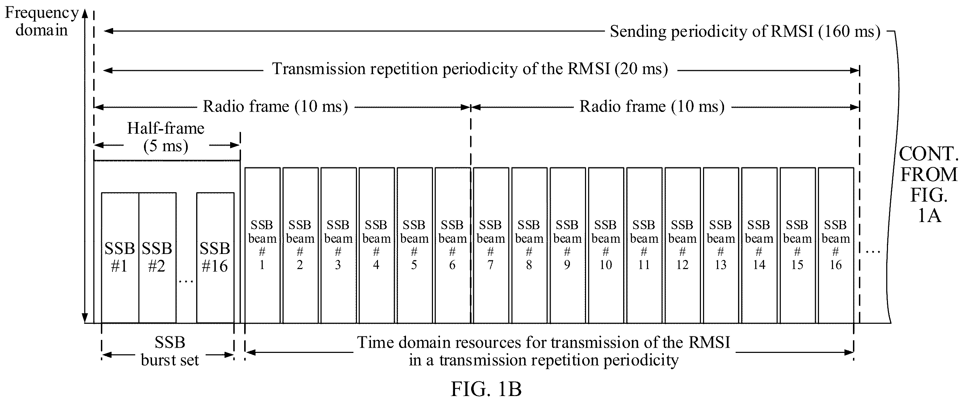

The following describes a case of transmission of the RMSI by using an example with reference to FIG. 1A and FIG. 1B.

FIG. 1A and FIG. 1B are a diagram of RMSI transmission according to an embodiment of this application. As shown in FIG. 1A and FIG. 1B, a transmission periodicity of an SSB burst set is 20 ms, and transmission of the SSB burst set is completed in a half-frame 5 ms. 16 SSBs, to be specific, an SSB #1 to an SSB #16, are transmitted in the SSB burst set. SSB beams of the 16 SSBs are respectively an SSB beam #1 to an SSB beam #16 (to be specific, an SSB beam of the SSB #1 is the SSB beam #1, an SSB beam of the SSB #2 is the SSB beam #2, ..., and an SSB beam of the SSB #16 is the SSB beam #16). Therefore, RMSI needs to be transmitted by using each of the SSB beam #1 to the SSB beam #16. To be specific, the RMSI is transmitted by using the SSB beam #1, the RMSI is transmitted by using the SSB beam #2, ..., and the RMSI is transmitted by using the SSB beam #16.

Further, a sending periodicity of the RMSI is 160 ms, and the RMSI transmitted by using the SSB beam #1 to the SSB beam #16 in 160 ms may be repeatedly transmitted. As shown in FIG. 1A and FIG. 1B, a transmission repetition periodicity is 20 ms. To be specific, in the RMSI sending periodicity (160 ms), the RMSI transmitted by using the SSB beam #1 to the SSB beam #16 may be transmitted for a total of eight times.

Further, in the transmission repetition periodicity, a time domain resource for transmission of the RMSI may be after a time domain resource for transmission of the SSB burst set. In the time domain resource for transmission of the RMSI, a time domain resource used for transmission of each SSB beam in the SSB beam #1 to the SSB beam #16 may be one slot.

However, when there are a large quantity of SSB beams for transmission of the RMSI, a proportion of time domain resource overheads for transmitting the RMSI is large in a time domain resource corresponding to the transmission repetition periodicity. For example, in the foregoing "1.1. Time domain resource", the 80 slots in one radio frame include the 64 downlink slots. The time domain resource corresponding to the transmission repetition periodicity 20 ms includes 128 downlink slots. In FIG. 1A and FIG. 1B, 16 slots are needed for time domain resource overheads for transmitting the RMSI by using 16 SSB beams, and therefore, a proportion of the time domain resource overheads for transmitting the RMSI is 12.5%, resulting in a large proportion of the time domain resource overheads for transmitting the RMSI.

It may be understood that it is difficult to use, for downlink data transmission, the time domain resource for transmitting the RMSI. For example, in a frequency range (frequency range, FR) 2 (for example, a millimeter wave frequency band) scenario, to compensate for a transmission loss of a high-frequency signal, limited energy needs to be concentrated in a narrow beam width. To be specific, the SSB beam used on the time domain resource for transmitting the RMSI can cover only limited quantity of terminal devices, and cannot be used for downlink data scheduling of another terminal device beyond a coverage area of the SSB beam. Consequently, downlink data transmission is limited. Further, according to related descriptions of PDSCH scheduling limitation in Chapter 5 of TS 38.214 (version h20), for a same cell operating in FR2, in a process of system information obtaining that is triggered by a paging radio network temporary identifier (paging radio network temporary identifier, P-RNTI), if there is a PDSCH that partially or completely overlaps, in time, a PDSCH scheduled by using a system information-radio network temporary identifier (SI-RNTI), the terminal device does not expect to simultaneously decode a PDSCH scheduled by using a cell-radio network temporary identifier (cell RNTI, C-RNTI), a modulation and coding scheme-cell-radio network temporary identifier (modulation and coding scheme-cell-RNTI, MCS-RNTI), or a configured scheduling-radio network temporary identifier (configured scheduling RNTI, CS-RNTI). That is, in the FR2 scenario, the terminal device does not expect to demodulate the RMSI and downlink data simultaneously in the same cell.

In conclusion, it is difficult to use, for downlink data transmission, the time domain resource for transmitting the RMSI. In other words, when the proportion of the time domain resource overheads for transmitting the RMSI is large, a proportion of a time domain resource for downlink data transmission is small, and a downlink data transmission rate is affected.

Further, when the network device has no load or has light load, the proportion of the time domain resource overheads for transmitting the RMSI is large. Consequently, power consumption of the network device is high. This is not conducive to energy saving of the network device.

It should be understood that, by extending the transmission repetition periodicity of the RMSI, the proportion of the time domain resource overheads for transmitting the RMSI can be reduced. However, for the terminal device that receives the RMSI for a plurality of times to perform RMSI combination, extending the transmission repetition periodicity of the RMSI causes impairment of an RMSI combination gain. For example, in FIG. 1A and FIG. 1B, the transmission repetition periodicity of the RMSI is 20 ms. In other words, the RMSI transmitted by using the SSB beam #1 to the SSB beam #16 may be transmitted for the total of eight times in 160 ms. The terminal device may perform RMSI combination by using the RMSI received for three times in 80 ms; or the terminal device may perform RSMI combination by using the RMSI received for four times in 100 ms. If the transmission repetition periodicity of the RMSI is extended to 80 ms, the RMSI transmitted by using the SSB beam #1 to the SSB beam #16 is transmitted for two times in 160 ms, so that the terminal device receives the RMSI for only one time in 80 ms, and cannot perform RMSI combination; or the terminal device performs RMSI combination by using the RMSI received for two times in 160 ms. In other words, if the transmission repetition periodicity of the RMSI is extended, a quantity of times of receiving the RMSI by the terminal device in given time is reduced, causing the impairment of the RMSI combination gain. Further, if the impairment of the RMSI combination gain is caused in a scenario in which coverage performance is limited, the RMSI coverage performance deteriorates.

In view of this, embodiments of this application provide a system information sending method, to reduce the proportion of the time domain resource overheads for transmitting the RMSI.

The following describes the technical solutions in embodiments of this application with reference to the accompanying drawings in embodiments of this application.

For ease of understanding of embodiments of this application, the following descriptions are provided before embodiments of this application are described.

1. In embodiments of this application, for ease of description, when numbering or indexing is involved, numbering may be performed consecutively starting from 1, or may be performed consecutively starting from 0, or may be performed starting from any parameter.

2. "Predefinition", "preconfiguration", or "agreement in a protocol" may be implemented by pre-storing corresponding code or a corresponding table in a device (for example, a network device), or in another manner that may indicate related information. A specific implementation of "predefinition", "preconfiguration", or "agreement in a protocol" is not limited in embodiments of this application. "Storing" may be storage in one or more memories.

3. "Protocol" in embodiments of this application may be a standard protocol in the communication field, for example, may include an LTE protocol, an NR protocol, and a related protocol applied to a future communication system. This is not limited in embodiments of this application.

4. In embodiments of this application, descriptions such as "when...", "in a case of...", and "if" all mean that a device (for example, a first device or a second device) performs corresponding processing in a specific objective situation, but are not intended to limit time, do not require that the device have a determining action during implementation, and do not mean that there is any other limitation.

5. In embodiments of this application, "sending information to... (the terminal device)" may be understood as that a destination end of the information is the terminal device, and may include directly or indirectly sending the information to the terminal device; and "receiving information from... (the network device)" or "receiving information that is from... (the network device)" may be understood as that a source end of the information is the network device, and may include directly or indirectly receiving the information from the network device. Information may undergo necessary processing, for example, a format change, between the source end for sending the information and the destination end. However, the destination end may understand valid information from the source end. A similar expression in this application may be understood similarly, and details are not described herein again.

6. In the descriptions of embodiments of this application, unless otherwise specified, "and/or" in embodiments of this application indicates that three relationships may exist. For example, A and/or B may indicate the following three cases: Only A exists, both A and B exist, and only B exists, where A and B may be singular or plural. In addition, "at least one of the following items (pieces)" or a similar expression thereof refers to any combination of these items, including any combination of a single item (piece) or a plurality of items (pieces). In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description.

Embodiments of this application are applicable to an LTE system or an NR system (which may also be referred to as a 5th generation (5th generation, 5G) system), an LTE-NR hybrid networking system, an internet of vehicles (vehicle to everything, V2X) system, a device-to-device (device-to-device, D2D) system, a machine to machine (machine to machine, M2M) communication system, an internet of things (internet of thing, IoT) system (for example, a narrowband internet of things (narrowband internet of things, NB-IoT) system), a 6G system, another next generation communication system, and the like. Alternatively, the communication system may be an open radio access network (open radio access network, O-RAN or ORAN) or a cloud radio access network (cloud RAN, CRAN). This is not limited.

In addition, a communication architecture and a service scenario described in embodiments of this application are intended to describe the technical solutions in embodiments of this application more clearly, and do not constitute a limitation on the technical solutions provided in embodiments of this application. A person of ordinary skill in the art may learn that, with the evolution of the communication architecture and the emergence of new service scenarios, the technical solutions provided in embodiments of this application are also applicable to similar technical problems.

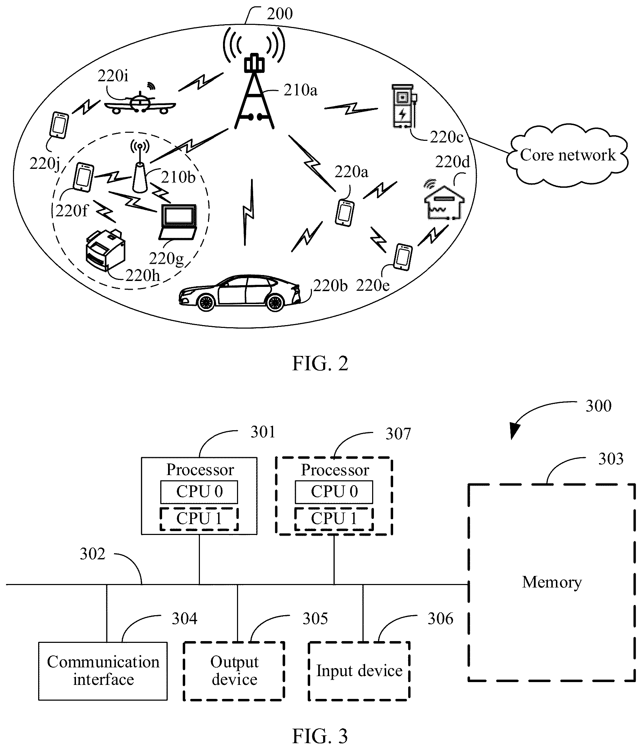

FIG. 2 is a diagram of a structure of a communication system 200 according to an embodiment of this application. FIG. 2 is described by using an example in which the communication system 200 includes at least one network device (for example, 210a or 210b in FIG. 2) and at least one terminal device (for example, 220a to 220j in FIG. 2) connected to the network device. It should be understood that the network device may be connected to a CN in a wireless or wired manner. A CN device and the network device in the CN may be different physical devices, or may be a same physical device that integrates a logical function of the CN and a logical function of a radio access network. It may be understood that a quantity of network devices and a quantity of terminal devices in FIG. 2 are merely examples, and there may be more or fewer network devices and terminal devices. This is not specifically limited in this embodiment of this application.

In a possible implementation, the network device determines, based on a transmission repetition periodicity of RMSI, a first sending periodicity and a time domain resource corresponding to the first sending periodicity, and sends the RMSI to the terminal device based on the first sending periodicity and the time domain resource corresponding to the first sending periodicity. The transmission repetition periodicity is a transmission repetition periodicity for transmission of the RMSI by using each of a plurality of beams. The time domain resource corresponding to the first sending periodicity includes: a time domain resource that is in a time domain resource corresponding to the transmission repetition periodicity and that is used for transmitting a first beam group in the plurality of beams and not for transmitting a beam other than the first beam group in the plurality of beams, and the first beam group is repeatedly transmitted in the first sending periodicity.

Specific implementations of the foregoing solution are described in detail in the following embodiments. Details are not described herein.

In this embodiment of this application, the network device sends the RMSI by using the time domain resource corresponding to the first sending periodicity, so that the network device can send the RMSI only by using the first beam group on the time domain resource corresponding to the transmission repetition periodicity, and does not need to send the RMSI by using each beam. Therefore, a proportion of time domain resource overheads for transmitting the RMSI can be reduced in the time domain resource corresponding to the transmission repetition periodicity. Further, the first beam group is repeatedly transmitted in the first sending periodicity, so that a degree of impairment of an RMSI combination gain can be reduced. Therefore, based on the system information sending method provided in embodiments of this application, the degree of the impairment of the RMSI combination gain can be reduced while the proportion of the time domain resource overheads for transmitting the RMSI is reduced.

In a possible implementation, the network device in this embodiment of this application may be a device communicating with the terminal device. The network device may also be referred to as an access network (radio access network, RAN) device, an access node, a RAN entity, a RAN node, or the like. As shown in FIG. 2, a plurality of network devices in the communication system 200 may be nodes of a same type, or may be nodes of different types. In some scenarios, roles of the network device and the terminal device are relative. For example, the network element 220i in FIG. 2 may be a helicopter or an uncrewed aerial vehicle, and may be configured as a mobile base station. For the terminal device 220j that accesses the communication system 200 via the network element 220i, the network element 220i may be the base station 210a. However, for the base station 210a, the network element 220i is a terminal device. Both the network device and the terminal device are sometimes referred to as communication apparatuses. For example, the network elements 210a and 210b in FIG. 2 may be understood as communication apparatuses having a base station function, and the network elements 220a to 220j may be understood as communication apparatuses having a terminal function.

In a possible scenario, the network device may be a transmission reception point (transmission reception point, TRP), a base station, a remote radio unit (remote radio unit, RRU) or a baseband unit (baseband unit, BBU) (which may also be referred to as a digital unit (digital unit, DU)) of a split base station, a broadband network gateway (broadband network gateway, BNG), an aggregation switch, a non-3GPP access device, a relay station, an access point, or the like. The network device may be a macro base station (for example, the network element 210a in FIG. 2), a micro base station or an indoor base station (for example, the network element 210b in FIG. 2), a relay node or a donor node, or a radio controller in a CRAN scenario. Optionally, the network device may alternatively be a server, a wearable device, a vehicle, a vehicle-mounted device, or the like. For example, a network device in a V2X system may be a road side unit (road side unit, RSU). In addition, the network device in embodiments of this application may be an eNB or an eNodeB (evolutional NodeB) in LTE, a radio controller in a CRAN scenario, a base station (for example, a next generation NodeB (gNodeB, gNB)) in a 5G communication system, a base station in a future evolved system (for example, a 6G communication system), or the like. This is not specifically limited herein.

In a possible implementation, in some deployments, the gNB may include a central unit (central unit, CU), a DU, a CU-control plane (control plane, CP), a CU-user plane (user plane, UP), or a radio unit (radio unit, RU). The gNB may further include an active antenna unit (active antenna unit, AAU). The CU implements some functions of the gNB, and the DU implements some functions of the gNB. For example, the CU is responsible for processing a non-real-time protocol and service, and implements functions of an RRC layer and/or a PDCP layer. The DU is responsible for processing a physical layer protocol and a real-time service, to implement functions of an RLC layer, a MAC layer, and a PHY layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified as a network device in the RAN, or the CU may be classified as a network device in the CN. This is not limited in embodiments of this application.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in embodiments of this application. Any one of the CU (or the CU-CP or the CU-UP), the DU, and the RU in embodiments of this application may be implemented by using a software module, a hardware module, or a combination of a software module and a hardware module.

In a possible implementation, the terminal device in embodiments of this application may be a device configured to implement a wireless communication function, for example, a terminal or a chip that may be used in the terminal. The terminal may be user equipment (user equipment, UE), an access terminal, a terminal unit, a terminal station, a mobile station, a remote station, a remote terminal, a mobile device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a VR terminal device, an AR terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. In a possible implementation, the terminal device may be mobile or fixed.

In a possible implementation, the network device and the terminal device in embodiments of this application may also be referred to as communication apparatuses, and each may be a general-purpose device or a dedicated device. This is not specifically limited in embodiments of this application.

In a possible implementation, a related function of the terminal device or the network device in embodiments of this application may be implemented by one device, may be jointly implemented by a plurality of devices, or may be implemented by one or more function modules in one device. This is not specifically limited in embodiments of this application. It may be understood that the foregoing function may be a network element in a hardware device, or may be a software function run on dedicated hardware, or a combination of hardware and software, or a virtualization function instantiated on a platform (for example, a cloud platform).

For example, the related function of the network device or the terminal device in embodiments of this application may be implemented by a communication apparatus 300 in FIG. 3. FIG. 3 is a diagram of a structure of a communication apparatus 300 according to an embodiment of this application. The communication apparatus 300 includes one or more processors 301, a communication line 302, and at least one communication interface (in FIG. 3, only an example in which the communication interface 304 and one processor 301 are included is used for description). Optionally, the communication apparatus 300 may further include a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 302 may include a path for connecting different components.

The communication interface 304 may be a transceiver module configured to communicate with another device or communication network, for example, an Ethernet, a RAN, or a wireless local area network (wireless local area network, WLAN). For example, the transceiver module may be an apparatus such as a transceiver or a transceiver machine. In a possible implementation, the communication interface 304 may alternatively be a transceiver circuit located in the processor 301, and is configured to implement signal input and signal output of the processor.

The memory 303 may be an apparatus having a storage function, for example, may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, another magnetic storage device, or any other medium that can be used to carry or store expected program code in a form of instructions or a data structure and that is accessible to a computer. However, this is not limited thereto. The memory may exist independently, and is connected to the processor through the communication line 302. The memory may alternatively be integrated with the processor.

The memory 303 is configured to store computer-executable instructions for performing the solutions in this application, and the processor 301 controls execution. The processor 301 is configured to execute the computer-executable instructions stored in the memory 303, to implement the signal transmission method provided in embodiments of this application.

Alternatively, in embodiments of this application, the processor 301 may implement a processing-related function in the signal transmission method provided in the following embodiments of this application, and the communication interface 304 is responsible for communicating with another device or a communication network. This is not specifically limited in embodiments of this application.

In a possible implementation, the memory 303 in this embodiment of this application may be further configured to store information or parameters described in the following embodiments, for example, RMSI, a transmission repetition periodicity of the RMSI, a first sending periodicity, or a time domain resource corresponding to the first sending periodicity.

The computer-executable instructions in embodiments of this application may also be referred to as application program code. This is not specifically limited in embodiments of this application.

During specific implementation, in an embodiment, the processor 301 may include one or more CPUs such as a CPU 0 and a CPU 1 in FIG. 3.

During specific implementation, in an embodiment, the communication apparatus 300 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, in an embodiment, the communication apparatus 300 may further include an output device 305 and an input device 306. The output device 305 communicates with the processor 301, and may display information in a plurality of manners.

The communication apparatus 300 may be a general-purpose apparatus or a dedicated apparatus. For example, the communication apparatus 300 may be a desktop computer, a portable computer, a network server, a personal digital assistant (personal digital assistant, PDA), a mobile phone, a tablet, a wireless terminal device, an embedded device, or a device having a structure similar to that in FIG. 3. A type of the communication apparatus 300 is not limited in this embodiment of this application.

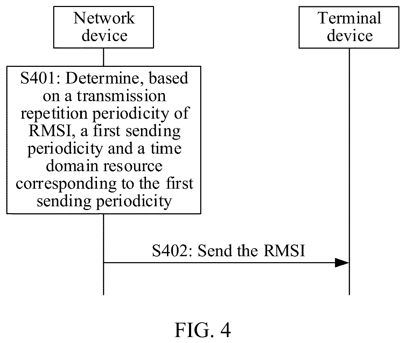

With reference to FIG. 4, the following describes in detail the system information sending method provided in embodiments of this application.

It should be understood that, in the following embodiments of this application, a name of a signal between devices or a name or the like of each parameter in the signal is merely an example, and may alternatively be another name in a specific implementation. This is not specifically limited in embodiments of this application.

Interaction between the network device and the terminal device shown in FIG. 2 is used as an example. FIG. 4 shows a system information sending method according to an embodiment of this application, including the following steps.

S401: The network device determines, based on a transmission repetition periodicity of RMSI, a first sending periodicity and a time domain resource corresponding to the first sending periodicity. The transmission repetition periodicity is a transmission repetition periodicity for transmission of the RMSI by using each of a plurality of beams. The time domain resource corresponding to the first sending periodicity includes: a time domain resource that is in a time domain resource corresponding to the transmission repetition periodicity and that is used for transmitting a first beam group in the plurality of beams and not for transmitting a beam other than the first beam group in the plurality of beams, and the first beam group is repeatedly transmitted in the first sending periodicity.

S402: The network device sends the RMSI to the terminal device based on the first sending periodicity and the time domain resource corresponding to the first sending periodicity. Correspondingly, the terminal device receives the RMSI from the network device.

The following separately describes the foregoing steps S401 and S402 in detail.

For step S401:

In a possible implementation, each of the plurality of beams corresponds to an SSB. For example, each of the plurality of beams may be an SSB beam corresponding to each of a plurality of SSBs, and the plurality of SSBs may be a plurality of SSBs in an SSB burst set. For details, refer to the SSB beam #1 to the SSB beam #16 for transmitting the RMSI in the transmission repetition periodicity in FIG. 1A and FIG. 1B. Details are not described herein again.

It may be understood that a quantity of the plurality of beams is related to a quantity of SSBs transmitted in the SSB burst set. For example, transmission of four SSBs in the SSB burst set is performed, and a quantity of the plurality of beams is 4. For another example, transmission of 64 beams in the SSB burst set is performed, and a quantity of the plurality of beams is 64.

Further, each of the plurality of beams may alternatively be a beam whose coverage area is close to a coverage area of the SSB beam corresponding to each of the plurality of beams. This is not specifically limited in this embodiment of this application.

In a possible implementation, a time domain resource used for transmission of each of the plurality of beams is determined based on the SSB corresponding to each of the plurality of beams.

For a specific manner of determining the time domain resource for each beam, refer to related descriptions in the foregoing "3. RMSI". Details are not described herein again.

In a possible implementation, the transmission repetition periodicity in step S401 may be the transmission repetition periodicity in the foregoing "RMSI". For details, refer to related descriptions. Details are not described herein again.

Further, the transmission repetition periodicity in this embodiment of this application may be a multiple of 20 ms, for example, 20 ms, 40 ms, 60 ms, 80 ms, or 160 ms. It should be understood that the transmission repetition periodicity may not be a multiple of 20 ms, for example, may be 21 ms, 22 ms, 30 ms, 31 ms, 39 ms, 41 ms, 49 ms, or 50 ms. This is not specifically limited in this embodiment of this application.

The following describes the first sending periodicity and the time domain resource corresponding to the first sending periodicity.

It should be understood that the first sending periodicity may be a sending periodicity for sending the RMSI by the network device. In the first sending periodicity, each of the plurality of beams is transmitted for at least one time. In other words, some of the plurality of beams may be repeatedly transmitted, so that a terminal device covered by the some beams may receive the RMSI for a plurality of times, to obtain an RMSI combination gain.

In a possible implementation, the first sending periodicity may be an integer multiple of the transmission repetition periodicity. For example, the first sending periodicity may be two times, three times, four times, or more times the transmission repetition periodicity. Further, the first sending periodicity may be 160 ms, or the first sending periodicity may be greater than 160 ms. This is not specifically limited in this embodiment of this application.

In a possible implementation, in the time domain resource corresponding to the first sending periodicity, the time domain resource used for transmission of each of the plurality of beams is a time domain resource corresponding to each of the plurality of beams in the transmission repetition periodicity. For example, the first sending periodicity is two times the transmission repetition periodicity, and transmission of 16 beams (that is, a beam #1 to a beam #16) is performed in the transmission repetition periodicity. Time domain resources corresponding to the first sending periodicity include a time domain resource #1 corresponding to a 1st transmission repetition periodicity, and a time domain resource #2 corresponding to a 2nd transmission repetition periodicity. In the first sending periodicity, a slot used for transmission of the beam #1 may be a slot used for transmission of the beam #1 on the time domain resource #1, and a slot used for transmission of the beam #16 may be a slot used for transmission of the beam #1 on a time domain resource #16.

In other words, in the time domain resource corresponding to the first sending periodicity, the time domain resource corresponding to each of the plurality of beams in the transmission repetition periodicity may be reused.

Further, the time domain resource corresponding to the first sending periodicity may include a time domain resource for sending only a first beam, to be specific, the time domain resource that is in the time domain resource corresponding to the transmission repetition periodicity and that is used for transmitting the first beam group in the plurality of beams and not for transmitting a beam other than the first beam group in the plurality of beams in step S401.

In other words, in the time domain resource corresponding to the transmission repetition periodicity, the beam other than the first beam group may not be sent, to reduce a proportion of time domain resource overheads for transmitting the RMSI.

In a possible implementation, the first beam group may include any Y beams in the plurality of beams. For example, the plurality of beams are M beams. A value range of Y is [1, M). Further, when Y is greater than 1, the Y beams may be adjacent to each other or separated from each other. This is not specifically limited in this embodiment of this application.

Further, as described in step 401, the first beam group is repeatedly transmitted in the first sending periodicity. A quantity of times of repeated transmission of the first beam group may be 1, 2, 3, or more. This is not specifically limited in this embodiment of this application.

In other words, for a terminal device in a coverage area of the first beam group, because the first beam group is repeatedly transmitted, the terminal device may receive the RMSI for a plurality of times in the first sending periodicity, to obtain the combination gain of the RMSI.

It may be understood that, for RMSI combination performed by the terminal device, the terminal device may receive the RMSI for three to five times in given time, to perform RMSI combination, so that the obtained RMSI combination gain can satisfy a coverage requirement.

Further, in a possible implementation, a time interval of the repeated transmission of the first beam group may be equal to the foregoing transmission repetition periodicity. In other words, because a periodicity of the repeated transmission of the first beam remains unchanged, in the given time, the terminal device in the coverage area of the first beam group may receive the RMSI for at least two times to perform RMSI combination, thereby reducing a degree of impairment of the RMSI combination gain.

It may be understood that when the quantity of times of the repeated transmission of the first beam group is greater than or equal to 2, and the time interval of the repeated transmission of the first beam group may be equal to the foregoing transmission repetition periodicity, the terminal device in the coverage area of the first beam group may receive the RMSI at least three times in the given time. That is, the RMSI combination gain is not impaired.

With reference to FIG. 4 to FIG. 7, the following further describes the time domain resource corresponding to the first sending periodicity.

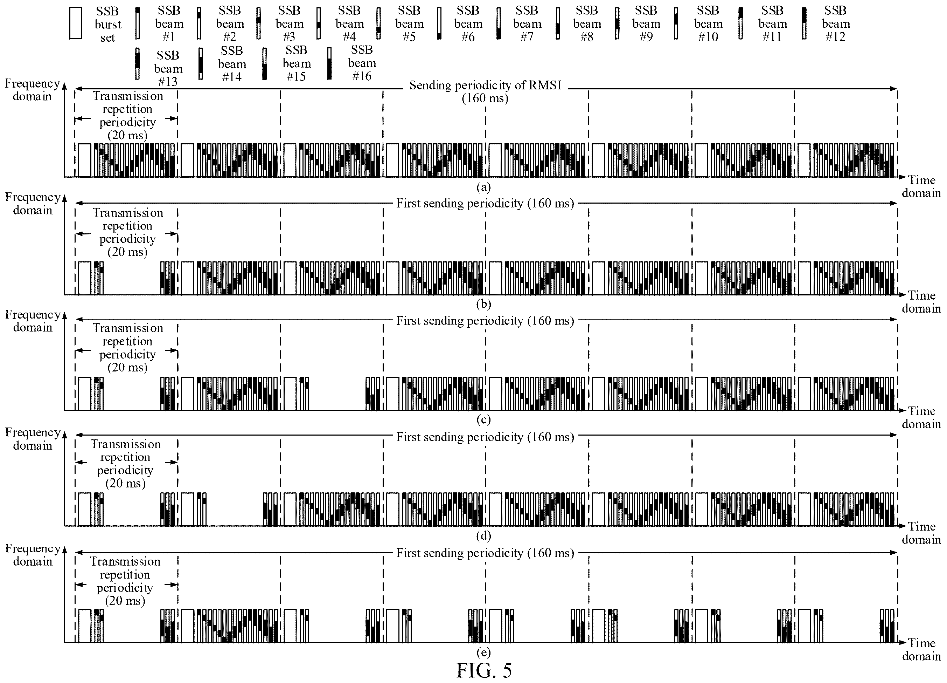

For example, the time domain resource corresponding to the first sending periodicity is described by using an example in which the plurality of beams are 16 SSB beams (to be specific, an SSB beam #1 to an SSB beam #16), the transmission repetition periodicity is 20 ms, and the first sending periodicity is 160 ms. As shown in FIG. 5, (a) in FIG. 5 is a diagram that is defined in TS 38.213 and in which RMSI is repeatedly transmitted by using 16 SSB beams in 160 ms. (b) in FIG. 5 is a diagram in which the time domain resource corresponding to the first sending periodicity includes a time domain resource for sending only a first beam group. In (b) in FIG. 5, the first beam group may include an SSB beam #1, an SSB beam #2, and SSB beams #14 to #16. On a time domain resource other than the time domain resource for sending only the first beam group, a network device may send RMSI by using each of a plurality of beams.

In other words, in one of transmission repetition periodicities 20 ms, time domain resource overheads for transmitting the RMSI are reduced from original 16 slots to 5 slots, so that a proportion of the time domain resource overheads for transmitting the RMSI is reduced from 16/128=12.5% in the foregoing example to 5/128=3.9%.

It may be understood that (b) in FIG. 5 is merely an example. The time domain resource for sending only the first beam group may not be in a time domain resource corresponding to a 1st transmission repetition periodicity in the first sending periodicity, or may be in a time domain resource other than the time domain resource corresponding to the 1st transmission repetition periodicity. This is not specifically limited in this embodiment of this application.

It should be understood that there may be a plurality of time domain resources for sending only the first beam group. Details are described below.

In a possible implementation, the time domain resource that is in the time domain resource corresponding to the transmission repetition periodicity and that is used for transmitting the first beam group in the plurality of beams and not for transmitting a beam other than the first beam group in the plurality of beams includes: a time domain resource that is in a time domain resource corresponding to each transmission repetition periodicity in time domain resources corresponding to N1 transmission repetition periodicities and that is used for transmitting the first beam and not for transmitting a beam other than the first beam group in the plurality of beams, and N1 is an integer greater than 1.

It may be understood that, by using a plurality of time domain resources for sending only the first beam group, the proportion of the time domain resource overheads for transmitting the RMSI on the time domain resource corresponding to the first sending periodicity can be reduced in an overall manner.

Further, in a possible implementation, time domain resources corresponding to all of the N1 transmission repetition periodicities have an interval between each other. The interval may be, for example, one transmission repetition periodicity, two transmission repetition periodicities, or more transmission repetition periodicities.

Further, an interval between time domain resources corresponding to two transmission repetition periodicities that vary may vary. For example, if N1 is 3, an interval between a time domain resource corresponding to a $1^{st}$ transmission repetition periodicity and a time domain resource corresponding to a $2^{nd}$ transmission repetition periodicity may be one transmission repetition periodicity, and an interval between the time domain resource corresponding to the $2^{nd}$ transmission repetition periodicity and a time domain resource corresponding to a 3rd transmission repetition periodicity may be two transmission repetition periodicities.

The following uses (c) in FIG. 5 as an example to describe the proportion of the time domain resource overheads for transmitting the RMSI.

As shown in (c) in FIG. 5, N1 is 2. To be specific, (c) in FIG. 5 is a diagram in which a first sending periodicity includes two time domain resources for sending only a first beam group. A time interval between the two time domain resources for sending only the first beam group is one transmission repetition periodicity. In other words, transmission time needed for the two time domain resources for sending only the first beam group is time corresponding to three transmission repetition periodicities. Therefore, in the time corresponding to the three transmission repetition periodicities, in comparison with the proportion 12.5% of the time domain resource overheads for transmitting the RMSI in (a) in FIG. 5, a proportion of time domain resource overheads for transmitting RMSI in (c) in FIG. 5 may be reduced to $(5+16+5)/(3\times128)$ =6.8%.

In another possible implementation, time domain resources corresponding to all of the N1 transmission repetition periodicities are adjacent to each other. It may be understood that, in comparison with the foregoing case in which the time domain resources corresponding to the N1 transmission repetition periodicities have an interval between each other, the time domain resources corresponding to the N1 transmission repetition periodicities are adjacent to each other, so that transmission time needed for sending the first beam group alone N1 times can be reduced, and the proportion of the time domain resource overheads for transmitting the RMSI can be further reduced.

For example, in comparison with a case in which the three transmission repetition periodicities (that is, 60 ms) are needed for the two time domain resources for sending only the first beam group in (c) in FIG. 5, because two time domain resources for sending only a first beam group in (d) in FIG. 5 are adjacent to each other, needed transmission time is only two transmission repetition periodicities (that is, 40 ms). In other words, in (d) in FIG. 5, in the needed transmission time, a proportion of time domain resource overheads for transmitting RMSI may be reduced from 6.8% in (c) in FIG. 5 to $(5+5)/(2\times128)=3.9\%$.

It may be understood that in the time domain resource corresponding to the first sending periodicity, in time resources (40 ms) corresponding to $1^{st}$ two transmission repetition periodicities, a proportion of time domain resource overheads for transmitting the RMSI in the $1^{st}$ 40 ms in (c) in FIG. 5 is $(5+16)/(2\times128)=8.2\%$, and a proportion of time domain resource overheads for transmitting the RMSI in the $1^{st}$ 40 ms in (d) in FIG. 5 is 3.9%.

In other words, in specific time in the first sending periodicity, time domain resources corresponding to all of the N1 transmission repetition periodicities are adjacent to each other, so that the proportion of the time domain resource overheads for transmitting the RMSI in the specific time can be further reduced.

It may be further understood that (c) and (d) in FIG. 5 are merely examples. The time domain resource for sending only the first beam group may alternatively be at any time domain position in the time domain resource corresponding to the first sending periodicity. This is not specifically limited in this embodiment of this application.

In a possible implementation, when N1 is greater than 2, time domain resources corresponding to at least two transmission repetition periodicities in the time domain resources corresponding to the N1 transmission repetition periodicities are adjacent to each other. It may be understood that the time domain resources corresponding to the at least two transmission repetition periodicities are adjacent to each other, so that the proportion of the time domain resource overheads for transmitting the RMSI can be reduced in the time domain resources corresponding to the adjacent transmission repetition periodicities.

For example, (e) in FIG. 5 is a diagram of time domain resources corresponding to a first sending periodicity when N1 is adjusted to 7. As shown in (e) in FIG. 5, in time domain resources corresponding to the seven transmission repetition periodicities, time domain resources corresponding to six transmission repetition periodicities are adjacent to each other. In other words, in last 120 ms of 160 ms, a proportion of time domain resource overheads for transmitting RMSI is 3.9%.

It should be understood that in (a) to (e) in FIG. 5, the first beam group is transmitted eight times in total in the first sending periodicity, and a time interval between two times of adjacent transmission is a transmission repetition periodicity. In other words, for the terminal device in the coverage area of the first beam group, the RMSI combination gain is not impaired.

In a possible implementation, time needed for transmission of the first beam group in the first sending periodicity is time corresponding to the N1 transmission repetition periodicities. In other words, in the first sending periodicity, transmission of the first beam group is performed by using the foregoing time domain resource for sending only the first beam group, and the first beam group is not repeatedly sent on another time domain resource. In this way, the time domain resource overheads for transmitting the RMSI can be further reduced. Further, the degree of the impairment of the RMSI combination gain can also be reduced by using the first beam group that is repeatedly sent adjacently.

For example, (d) in FIG. 5 is used as an example. If the first beam group is not sent in last 120 ms of 160 ms, a proportion of time domain resource overheads for transmitting the RMSI in the last 120 ms is reduced from 12.5% to 3.9%. Further, the terminal device in the coverage area of the first beam group may receive the RMSI for two times in 1st 40 ms of the 160 ms, to perform RMSI combination, so that the degree of the impairment of the RMSI combination gain can be reduced.

It may be understood that, on a basis that the first beam group is not repeatedly sent on the another time domain resource, the another time domain resource may be used for sending a beam other than the first beam group in the plurality of beams, for example, a second beam group, and may be used by a terminal device in a coverage area of the second beam group to receive the RMSI.

The following describes a time domain resource used for transmission of the second beam group in the time domain resource corresponding to the first sending periodicity.

In a possible implementation, the time domain resource corresponding to the first sending periodicity further includes: a time domain resource that is in the time domain resource corresponding to the transmission repetition periodicity and that is used for transmitting the second beam group in the plurality of beams and not for transmitting a beam other than the second beam group in the plurality of beams, and a beam included in the second beam group is different from a beam included in the first beam group.

In other words, on a basis of sending only the first beam group, the proportion of the time domain resource overheads for transmitting the RMSI may be further reduced by not sending the beam other than the second beam group.

It should be understood that, for ease of description, the foregoing "a time domain resource that is in the time domain resource corresponding to the transmission repetition periodicity and that is used for transmitting the second beam group in the plurality of beams and not for transmitting a beam other than the second beam group in the plurality of beams" is replaced with "a time domain resource for sending only the second beam group".

In a possible implementation, a quantity of beams included in the second beam group may be K. For example, the plurality of beams are M beams, and a quantity of beams included in the first beam group is Y. A value range of K is [1, M-Y]. Further, when K is greater than 1, the K beams are adjacent to each other or are separated from each other. This is not specifically limited in this embodiment of this application.

It may be understood that K may be the same as or different from Y. For example, M=16. Y may be equal to 4, and K may be equal to any value in 1 to 12. For example, a first beam group in (a) to (e) in FIG. 5 is the SSB beam #1, the SSB beam #2, and the SSB beams #14 to #16, and a second beam group may be any one, two, three, 12, or the like of the SSB beam #3 to the SSB beam #13. For example, the second beam group includes the SSB beam #3 to the SSB beam #13. In the time domain resource corresponding to the first sending periodicity, time domain resource overheads for transmitting the RMSI are reduced from original 16 slots to 11 slots in one transmission repetition periodicity 20 ms, so that a proportion of the time domain resource overheads for transmitting the RMSI is reduced from 12.5% to 8.6%.

In a possible implementation, the time domain resource that is in the time domain resource corresponding to the transmission repetition periodicity and that is used for transmitting the second beam group in the plurality of beams and not for transmitting a beam other than the second beam group in the plurality of beams includes: a time domain resource that is in a time domain resource corresponding to each transmission repetition periodicity in time domain resources corresponding to N2 transmission repetition periodicities and that is used for transmitting a second beam and not for transmitting a beam other than the second beam group in the plurality of beams, and N2 is an integer greater than 1.

In other words, in the time domain resource corresponding to the first sending periodicity, the second beam group may also be repeatedly transmitted. Therefore, for the terminal device in the coverage area of the second beam group, the degree of the impairment of the RMSI combination gain can be reduced.

It may be understood that the time domain resource for sending only the second beam group is similar to the time domain resource for sending only the first beam group. For example, a quantity of time domain resources for sending only the second beam group may be N2. For another example, the time domain resources corresponding to the N2 transmission repetition periodicities may be at any time domain position in the first sending periodicity. For another example, the time domain resources corresponding to each transmission repetition periodicity in the time domain resources corresponding to the N2 transmission repetition periodicities may have an interval in between, be adjacent, or be partially adjacent. For details, refer to the foregoing related descriptions of "the time domain resource for sending only the first beam group". Details are not described herein again.

With reference to the time domain resource for sending only the first beam group and the time domain resource for sending only the second beam group, the following further describes the time domain resource corresponding to the first sending periodicity.

In a possible implementation, the time domain resource corresponding to each transmission repetition periodicity in the time domain resources corresponding to the N1 transmission repetition periodicities may be adjacent to the time domain resource corresponding to each transmission repetition periodicity in the time domain resources corresponding to the N2 transmission repetition periodicities.

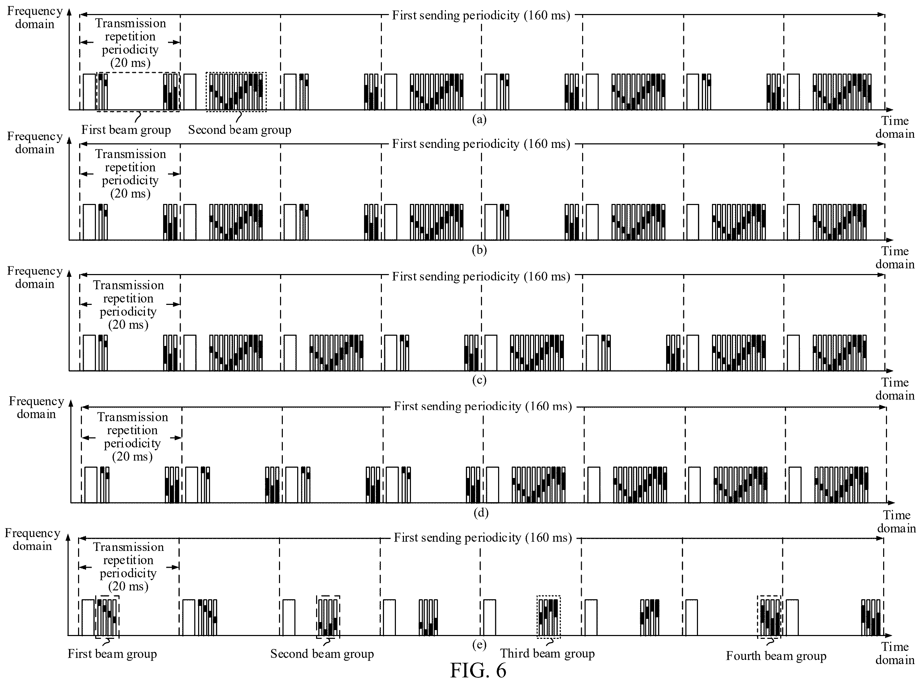

For example, as shown in (a) in FIG. 6, a first beam group is the first beam group in (a) to (d) in FIG. 5, and a second beam group includes an SSB beam #3 to an SSB beam #13. Time domain resources corresponding to a first sending periodicity may be classified into two types: a time domain resource for sending only the first beam group and a time domain resource for sending only the second beam group. Further, a quantity of time domain resources for sending only the first beam group is N1, and a quantity of time domain resources for sending only the second beam group is N2. The two types of time domain resources may be alternately arranged in time domain, as shown in (a) in FIG. 6.

It may be understood that, as shown in (a) in FIG. 6, in the time domain resources corresponding to the first sending periodicity, a proportion of time domain resource overheads for transmitting RMSI is reduced from 12.5% to 6.25%.

In a possible implementation, N1 and N2 may be different. The time domain resources for sending only the first beam group and the time domain resources for sending only the second beam group may be alternately arranged first or later. As shown in (b) in FIG. 6, N1=3, and N2=5. Three time domain resources for sending only the first beam group and three time domain resources for sending only the second beam group may be alternately arranged first, and then remaining two time domain resources for sending only the second beam group are arranged.

It may be understood that, another arrangement manner may be used for the time domain resource for sending only the first beam group and the time domain resource for sending only the second beam group. For example, as shown in (c) in FIG. 6, time domain resources corresponding to a first sending periodicity are chronologically sequenced as follows: a time domain resource for sending only a first beam group, two time domain resources for sending only a second beam group, a time domain resource for sending only the first beam group, a time domain resource for sending only the second beam group, a time domain resource for sending only the first beam group, and two time domain resources for sending only the second beam group.

In a possible implementation, the first beam group is periodically transmitted in the first sending periodicity. A periodicity in which the first beam group is transmitted in the first sending periodicity may be the transmission repetition periodicity.

In other words, the terminal device in the coverage area of the first beam group may continuously receive the RMSI for N1 times to perform RMSI combination, thereby reducing the degree of the impairment of the RMSI combination gain.

It may be understood that the second beam group may also be periodically transmitted in the first sending periodicity, and a periodicity in which the second beam group is transmitted in the first sending periodicity may also be the transmission repetition periodicity. In this way, for the terminal device in the coverage area of the second beam group, the degree of the impairment of the RMSI combination gain can be reduced.

It should be understood that the network device may first transmit the first beam group for N1 times in the first sending periodicity, and then transmit the second beam group for N2 times. Alternatively, the network device may first transmit the second beam group for N2 times, and then transmit the first beam group for N1 times.

For example, as shown in (d) in FIG. 6, in a first sending periodicity, a first beam group may be first transmitted four times, and then a second beam group may be transmitted four times. In this way, in time domain resources corresponding to the first sending periodicity, a proportion of time domain resource overheads for transmitting RMSI in 1st 80 ms is 3.9%, and a proportion of time domain resource overheads for transmitting the RMSI in last 80 ms is 11/128=8.6%.

It may be understood that when a quantity of beams between the first beam group and the second beam group is less than a quantity of a plurality of beams that need to be traversed, the network device may further send a third beam group, the third beam group and a fourth beam group, or the like. The third beam group may include a beam other than the first beam group and the second beam group in the plurality of beams. The fourth beam group may include a beam other than the first beam group to the third beam group in the plurality of beams.

For example, as shown in (e) in FIG. 6, the network device may send a first beam group to a fourth beam group. The first beam group includes an SSB beam #1 to an SSB beam #4. The second beam group includes an SSB beam #5 to an SSB beam #8. The third beam group includes an SSB beam #9 to an SSB beam #12. The fourth beam group includes an SSB beam #13 to an SSB beam #16.

Further, quantities of times of transmission in the first sending periodicity may be the same or different for all beam groups in the first beam group to the fourth beam group. This is not specifically limited in this embodiment of this application.

For example, in the example shown in (e) in FIG. 6, a quantity of times of transmission in the first sending periodicity is 2 for each beam group in the first beam group to the fourth beam group. That is, each beam group may be repeatedly transmitted for one time. Time needed for transmission of each beam group in the first beam group to the fourth beam group in the first sending periodicity is time corresponding to two transmission repetition periodicities, that is, 40 ms. In other words, the SSB beam #1 to the SSB beam #4 may be sent for two times in 1st 40 ms of the first sending periodicity, the SSB beam #5 to the SSB beam #8 may be sent for two times in a 40th ms to an 80th ms of the first sending periodicity, the SSB beam #9 to the SSB beam #12 may be sent for two times in the 80th ms to a 120th ms of the first sending periodicity, and the SSB beam #13 to the SSB beam #16 are sent for two times in the 120th ms to a 160th ms in the first sending periodicity. In this way, in time domain resources corresponding to the first sending periodicity, a proportion of time domain resource overheads for transmitting RMSI is reduced from 12.5% to one-fourth of the original.

It may be further understood that the time needed for transmission of each beam group in the first beam group to the fourth beam group in the first sending periodicity may be a multiple of the transmission repetition periodicity, for example, 20 ms, 40 ms, 80 ms, or 160 ms. For example, when the time needed for transmission of each beam group in the first beam group to the fourth beam group in the first sending periodicity is 160 ms, the first sending periodicity is 640 ms.

It should be understood that, as described in the foregoing related descriptions of the first sending periodicity, the RMSI is transmitted by using the first sending periodicity and the time domain resource corresponding to the first sending periodicity, so that the proportion of the time domain resource overheads for transmitting the RMSI can be reduced, and the degree of the impairment of the RMSI combination gain can be reduced, thereby increasing a proportion of time domain resources used for downlink data transmission, and reducing power consumption of the network device when the network device has no load or has light load.

The following describes an example of a scenario in which the network device determines, based on the transmission repetition periodicity of the RMSI, the first sending periodicity and the time domain resource corresponding to the first sending periodicity (that is, step S401).

For example, the network device may perform step S401 when the network device has no load or has light load. When there is no load or the load is light, there are few terminal devices that need to access a network in a cell corresponding to the network device, and the network device may not frequently send the RMSI, thereby reducing the power consumption.

For another example, the network device may perform step S401 when there is a high requirement on the downlink data transmission, to use a saved time domain resource for transmitting the RMSI for PDSCH scheduling of another terminal device, thereby increasing a downlink data transmission rate.

It may be understood that the network device may alternatively perform step S401 based on an indication of a CN. This is not specifically limited in this embodiment of this application.

For step S402:

It may be understood that, as described in the foregoing related descriptions of "2. SSB", after receiving the SSB from the network device, the terminal device may obtain, based on the MIB in the SSB, the configuration parameter needed for the RMSI, and blindly detect the PDCCH based on the configuration parameter, to obtain the DCI indicating the time-frequency resource of the PDSCH bearing the RMSI. In this way, the terminal device can receive the RMSI from the network device. For a specific process in which the terminal device obtains the RMSI, refer to related descriptions in TS 38.213. Details are not described herein again.

It may be understood that, in the foregoing case in which only the first beam group is transmitted, the network device may not send a PDCCH corresponding to the beam other than the first beam group in the plurality of beam groups.

It should be understood that, in this embodiment of this application, the network device may be the O-CU, the O-DU, or the O-RU in the ORAN, or may be a combination of the O-CU, the O-DU, or the O-RU. For example, the O-DU may determine, based on a scheduling parameter, how to broadcast system information. For example, the O-DU may determine, based on the transmission repetition periodicity of the RMSI, the first sending periodicity and the time domain resource corresponding to the first sending periodicity. Further, the O-DU may send the RMSI via the O-RU based on the first sending periodicity and the time domain resource corresponding to the first sending periodicity.

For another example, the O-CU may determine, based on the transmission repetition periodicity of the RMSI, the first sending periodicity and the time domain resource corresponding to the first sending periodicity, and send the RMSI via the O-RU based on the first sending periodicity and the time domain resource corresponding to the first sending periodicity.

For another example, the O-CU may determine, based on the transmission repetition periodicity of the RMSI, the first sending periodicity and the time domain resource corresponding to the first sending periodicity, and the O-DU may generate specific content of the RMSI, and then send the RMSI via the O-RU. Alternatively, it may be understood that the O-DU may determine, based on the transmission repetition periodicity of the RMSI, the first sending periodicity and the time domain resource corresponding to the first sending periodicity, and the O-CU generates the specific content of the RMSI.

It should be understood that the O-CU and the O-DU are responsible for a function of a higher layer protocol layer, and information of a higher layer is finally changed into information of a PHY layer, or is converted from information of the PHY layer. Therefore, in an ORAN architecture, the RMSI in this embodiment of this application may alternatively be considered to be sent by the O-CU and/or the O-DU.

In this embodiment of this application, the network device sends the RMSI by using the time domain resource corresponding to the first sending periodicity, so that the network device can send the RMSI only by using the first beam group on the time domain resource corresponding to the transmission repetition periodicity, and does not need to send the RMSI by using each beam. Therefore, a proportion of time domain resource overheads for transmitting the RMSI can be reduced in the time domain resource corresponding to the transmission repetition periodicity. Further, the first beam group is repeatedly transmitted in the first sending periodicity, so that the degree of the impairment of the RMSI combination gain can be reduced. Therefore, based on the system information sending method provided in embodiments of this application, the degree of the impairment of the RMSI combination gain can be reduced while the proportion of the time domain resource overheads for transmitting the RMSI is reduced.

The actions of the network device in steps S401 and S402 may be performed by the processor 301 in the communication apparatus 300 shown in FIG. 3 by invoking the application program code to instruct the communication apparatus 300 to perform the actions. The actions of the terminal device in steps S401 and S402 may be performed by the processor 301 in the communication apparatus 300 shown in FIG. 3 by invoking the application program code to instruct the communication apparatus 300 to perform the actions. This is not limited in this embodiment of this application.

The foregoing mainly describes the solutions provided in embodiments of this application from a perspective of interaction between network elements. Correspondingly, an embodiment of this application further provides a communication apparatus, and the communication apparatus is configured to implement the foregoing methods. The communication apparatus may be the network device in the foregoing method embodiments, an apparatus including the foregoing network device, or a component that can be used in the network device. Alternatively, the communication apparatus may be the first terminal device in the foregoing method embodiments, an apparatus including the foregoing first terminal device, or a component that can be used in the first terminal device. It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into function modules based on the foregoing method embodiments. For example, each function module may be obtained through division based on each corresponding function, or two or more functions may be integrated into one processing module. The integrated module may be implemented in a form of hardware, or may be implemented in a form of a software function module. It should be understood that division into modules in embodiments of this application is an example, and is merely logical function division. During actual implementation, there may be another division manner.

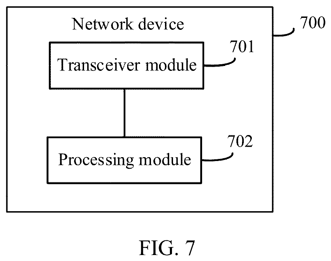

For example, the communication apparatus is the network device in the foregoing method embodiments. FIG. 7 is a diagram of a structure of a network device 700. The network device 700 includes a transceiver module 701 and a processing module 702. The transceiver module 701 may also be referred to as a transceiver unit, and is configured to implement a transceiver function. For example, the transceiver module 701 may be a transceiver circuit, a transceiver machine, a transceiver, or a communication interface.

The processing module 702 is configured to implement a processing function corresponding to the network device in the foregoing method embodiments, and the transceiver module 701 is configured to implement a transceiver function corresponding to the network device in the foregoing method embodiments.

For example, the processing module 702 is configured to determine, based on a transmission repetition periodicity of RMSI, a first sending periodicity and a time domain resource corresponding to the first sending periodicity; and the transceiver module 701 is configured to send the RMSI to a terminal device based on the first sending periodicity and the time domain resource corresponding to the first sending periodicity. The transmission repetition periodicity is a transmission repetition periodicity for transmission of the RMSI by using each of a plurality of beams. The time domain resource corresponding to the first sending periodicity includes: a time domain resource that is in a time domain resource corresponding to the transmission repetition periodicity and that is used for transmitting a first beam group in the plurality of beams and not for transmitting a beam other than the first beam group in the plurality of beams, and the first beam group is repeatedly transmitted in the first sending periodicity.

In some embodiments, a time domain resource used for transmission of each of the plurality of beams is determined based on an SSB corresponding to each of the plurality of beams.

In some embodiments, the time domain resource that is in the time domain resource corresponding to the transmission repetition periodicity and that is used for transmitting the first beam group in the plurality of beams and not for transmitting a beam other than the first beam group in the plurality of beams includes: a time domain resource that is in a time domain resource corresponding to each transmission repetition periodicity in time domain resources corresponding to N1 transmission repetition periodicities and that is used for transmitting a first beam and not for transmitting a beam other than the first beam group in the plurality of beams, and N1 is an integer greater than 1.

In some embodiments, time domain resources corresponding to all of the N1 transmission repetition periodicities have an interval between each other.

In some embodiments, time domain resources corresponding to all of the N1 transmission repetition periodicities are adjacent to each other.

In some embodiments, when N1 is greater than 2, time domain resources corresponding to at least two transmission repetition periodicities in the time domain resources corresponding to the N1 transmission repetition periodicities are adjacent to each other.

In some embodiments, time needed for transmission of the first beam group in the first sending periodicity is time corresponding to the N1 transmission repetition periodicities.

In some embodiments, the time domain resource corresponding to the first sending periodicity further includes: a time domain resource that is in the time domain resource corresponding to the transmission repetition periodicity and that is used for transmitting a second beam group in the plurality of beams and not for transmitting a beam other than the second beam group in the plurality of beams, and a beam included in the second beam group is different from a beam included in the first beam group.

In some embodiments, the time domain resource that is in the time domain resource corresponding to the transmission repetition periodicity and that is used for transmitting the second beam group in the plurality of beams and not for transmitting a beam other than the second beam group in the plurality of beams includes: a time domain resource that is in a time domain resource corresponding to each transmission repetition periodicity in time domain resources corresponding to N2 transmission repetition periodicities and that is used for transmitting a second beam and not for transmitting a beam other than the second beam group in the plurality of beams, and N2 is an integer greater than 1.

All related content of the steps in the foregoing method embodiments may be cited in function descriptions of the corresponding function modules. Details are not described herein again.

In this embodiment of this application, the network device 700 is presented in a form of obtaining each function module through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the network device 700 may be in a form of the communication apparatus 300 shown in FIG. 3.

For example, the processor 301 in the communication apparatus 300 shown in FIG. 3 may invoke computer-executable instructions, so that the communication apparatus 300 performs the system information sending method in the foregoing method embodiments.

Specifically, functions/implementation processes of the transceiver module 701 and the processing module 702 in FIG. 7 may be implemented by the processor 301 in the communication apparatus 300 shown in FIG. 3 by invoking the computer-executable instructions. Alternatively, functions/implementation processes of the processing module 702 in FIG. 7 may be implemented by the processor 301 in the communication apparatus 300 shown in FIG. 3 by invoking the computer-executable instructions, and functions/implementation processes of the transceiver module 701 in FIG. 7 may be implemented by using the communication interface 304 in the communication apparatus 300 shown in FIG. 3.

Because the network device 700 provided in this embodiment of this application may perform the foregoing system information sending method, for technical effects that can be achieved by the network device 700, refer to the foregoing method embodiments. Details are not described herein again.

It should be understood that one or more of the modules or units may be implemented by software, hardware, or a combination thereof. When any one of the foregoing modules or units is implemented by software, the software exists in a form of computer program instructions. Optionally, the computer program instructions are stored in the memory, and the processor may be configured to execute the program instructions and implement the foregoing method procedure. The processor may be built into a SoC (System on Chip) or an ASIC, or may be an independent semiconductor chip. In addition to the core configured to perform calculation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a communication apparatus (for example, the communication apparatus may be a chip or a chip system). The communication apparatus includes a processor, configured to implement the method in any one of the foregoing method embodiments.

Optionally, the communication apparatus further includes a memory. The memory is configured to store necessary program instructions and necessary data. The processor may invoke program code stored in the memory, to indicate the communication apparatus to perform the method in any one of the foregoing method embodiments. Certainly, the communication apparatus may not include the memory. When the communication apparatus is the chip system, the communication device may include a chip, or may include a chip and another discrete component. This is not specifically limited in this embodiment of this application.

Optionally, an embodiment of this application further provides a computer-readable storage medium. The computer-readable storage medium stores a computer program or instructions. When the computer program or instructions are run on a communication apparatus, the communication apparatus is enabled to perform the method in any one of the foregoing method embodiments or the implementations of the foregoing method embodiments.

Optionally, an embodiment of this application further provides a communication system. The communication system includes the network device in the foregoing method embodiments and the terminal device in the foregoing method embodiments.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

Although this application is described with reference to embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example description of this application defined by the accompanying claims, and are considered as any of or all modifications, variations, combinations or equivalents that cover the scope of this application. It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A system information sending method, wherein the method comprises:

determining, by a network device based on a transmission repetition periodicity of remaining minimum system information RMSI, a first sending periodicity and a time domain resource corresponding to the first sending periodicity, wherein the transmission repetition periodicity is a transmission repetition periodicity for transmission of the RMSI by using each of a plurality of beams, the time domain resource corresponding to the first sending periodicity comprises: a time domain resource that is in a time domain resource corresponding to the transmission repetition periodicity and that is used for transmitting a first beam group in the plurality of beams and not for transmitting a beam other than the first beam group in the plurality of beams, and the first beam group is repeatedly transmitted in the first sending periodicity; and

sending, by the network device, the RMSI to a terminal device based on the first sending periodicity and the time domain resource corresponding to the first sending periodicity.

2. The method according to claim 1, wherein the time domain resource that is in the time domain resource corresponding to the transmission repetition periodicity and that is used for transmitting the first beam group in the plurality of beams and not for transmitting a beam other than the first beam group in the plurality of beams comprises: a time domain resource that is in a time domain resource corresponding to each transmission repetition periodicity in time domain resources corresponding to the N1 transmission repetition periodicities and that is used for transmitting the first beam and not for transmitting a beam other than the first beam group in the plurality of beams, and N1 is an integer greater than 1.

3. The method according to claim 2, wherein when N1 is greater than 2, time domain resources corresponding to at least two transmission repetition periodicities in the time domain resources corresponding to the N1 transmission repetition periodicities are adjacent to each other.

4. The method according to claim 2 or 3, wherein time domain resources corresponding to all of the N1 transmission repetition periodicities are adjacent to each other.

5. The method according to claim 2, wherein time domain resources corresponding to all of the N1 transmission repetition periodicities have an interval between each other.

6. The method according to any one of claims 2 to 5, wherein time needed for transmission of the first beam group in the first sending periodicity is time corresponding to the N1 transmission repetition periodicities.

7. The method according to any one of claims 1 to 6, wherein the time domain resource corresponding to the first sending periodicity further comprises: a time domain resource that is in the time domain resource corresponding to the transmission repetition periodicity and that is used for transmitting a second beam group in the plurality of beams and not for transmitting a beam other than the second beam group in the plurality of beams, and a beam comprised in the second beam group is different from a beam comprised in the first beam group.

8. The method according to claim 7, wherein the time domain resource that is in the time domain resource corresponding to the transmission repetition periodicity and that is used for transmitting the second beam group in the plurality of beams and not for transmitting a beam other than the second beam group in the plurality of beams comprises: a time domain resource that is in a time domain resource corresponding to each transmission repetition periodicity in time domain resources corresponding to the N2 transmission repetition periodicities and that is used for transmitting the second beam and not for transmitting a beam other than the second beam group in the plurality of beams, and N2 is an integer greater than 1.

9. The method according to any one of claims 1 to 8, wherein a time domain resource used for transmission of each of the plurality of beams is determined based on a synchronization signal/physical broadcast channel block SSB corresponding to each of the plurality of beams.

10. A communication apparatus, wherein the communication apparatus is configured to perform the system information sending method according to any one of claims 1 to 9.

11. A communication apparatus, wherein the communication apparatus comprises a processor and a storage medium, the storage medium stores instructions, and when the instructions are run by the processor, the system information sending method according to any one of claims 1 to 9 is implemented.

12. A computer-readable storage medium, wherein the computer-readable storage medium comprises instructions, and when the instructions are run by a processor, the system information sending method according to any one of claims 1 to 9 is implemented.

13. A computer program product, wherein the computer program product comprises instructions, and when the instructions are run by a processor, the system information sending method according to any one of claims 1 to 9 is implemented.

14. A communication system, wherein the communication system comprises a network device, and the network device is configured to perform the method according to any one of claims 1 to 9.

Transmission repetition periodicity of the RMSI (20 ms)

Radio frame (10 ms)

Radio frame (10 ms)

Half-frame (5 ms)

SSB burst set

SSB #1 | SSB #2 | ... | SSB #16

| SSB beam #1 | SSB beam #2 | SSB beam #3 | SSB beam #4 | SSB beam #5 | SSB beam #6 | SSB beam #7 | SSB beam #8 | SSB beam #9 | SSB beam #10 | SSB beam #11 | SSB beam #12 | SSB beam #13 | SSB beam #14 | SSB beam #15 | SSB beam #16 |

Time domain resources for transmission of the RMSI in a transmission repetition periodicity

Time domain

FIG. 1A

TO FIG. 1B

FIG. 1B

FIG. 2

FIG. 3

Network
device

Terminal
device

S401: Determine, based
on a transmission
repetition periodicity of
RMSI, a first sending
periodicity and a time
domain resource
corresponding to the first
sending periodicity

S402: Send the RMSI

FIG. 4

FIG. 5

FIG. 6

FIG. 7

## INTERNATIONAL SEARCH REPORT

| International application No. |
| --- |
| **PCT/CN2024/101091** |

| A. CLASSIFICATION OF SUBJECT MATTER |
| --- |
| H04W 72/0446(2023.01)i |
| According to International Patent Classification (IPC) or to both national classification and IPC |

| B. FIELDS SEARCHED |
| --- |
| Minimum documentation searched (classification system followed by classification symbols) |
| IPC:H04L, H04W |

Documentation searched other than minimum documentation to the extent that such documents are included in the fields searched

| Electronic data base consulted during the international search (name of data base and, where practicable, search terms used) |
| --- |
| CNTXT, ENTXT, WPABS, VEN, CNKI; 3GPP: 波束, 剩余最小系统信息, 时隙, 时域, 资源, 重复, 传输, 周期, beam, RMSI, slot, time domain, resource, repeat, transmission, period |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | US 2020351759 A1 (TELEFONAKTIEBOLAGET LM ERICSSON (PUBL)) 05 November 2020 (2020-11-05) claims 1-20, description, paragraphs [0065], [0093], [0094], [0139] and [0142], and figure 1 | 1-14 |
| A | CN 110691413 A (POTEVIO INFORMATION TECHNOLOGY CO., LTD.) 14 January 2020 (2020-01-14) entire document | 1-14 |
| A | CN 113840300 A (HUAWEI TECHNOLOGIES CO., LTD.) 24 December 2021 (2021-12-24) entire document | 1-14 |
| A | WO 2021114148 A1 (HUAWEI TECHNOLOGIES CO., LTD.) 17 June 2021 (2021-06-17) entire document | 1-14 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **16 August 2024** | **04 September 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
**Information on patent family members**

International application No.

**PCT/CN2024/101091**

| Patent document cited in search report | | | Publication date (day/month/year) | Patent family member(s) | | | Publication date (day/month/year) |
|---|---|---|---|---|---|---|---|
| US | 2020351759 | A1 | 05 November 2020 | PL | 3735792 | T3 | 29 January 2024 |
| | | | | EP | 3735792 | A1 | 11 November 2020 |
| | | | | EP | 3735792 | A4 | 09 December 2020 |
| | | | | EP | 3735792 | B1 | 16 August 2023 |
| | | | | US | 10939360 | B2 | 02 March 2021 |
| | | | | US | 2021185594 | A1 | 17 June 2021 |
| | | | | US | 11696217 | B2 | 04 July 2023 |
| | | | | WO | 2019134636 | A1 | 11 July 2019 |
| | | | | KR | 20200105503 | A | 07 September 2020 |
| | | | | KR | 102403157 | B1 | 30 May 2022 |
| | | | | US | 2023308988 | A1 | 28 September 2023 |
| | | | | KR | 20220076533 | A | 08 June 2022 |
| | | | | KR | 102440875 | B1 | 07 September 2022 |
| | | | | JP | 2021510032 | A | 08 April 2021 |
| | | | | JP | 7171733 | B2 | 15 November 2022 |
| | | | | ES | 2956333 | T3 | 19 December 2023 |
| CN | 110691413 | A | 14 January 2020 | None | | | |
| CN | 113840300 | A | 24 December 2021 | None | | | |
| WO | 2021114148 | A1 | 17 June 2021 | None | | | |

Form PCT/ISA/210 (patent family annex) (July 2022)

**REFERENCES CITED IN THE DESCRIPTION**

**Patent documents cited in the description**

- CN 202310788838